Europäisches Patentamt

European Patent Office

Office européen des brevets

(11) Publication number : **0 526 977 A2**

# (12) EUROPEAN PATENT APPLICATION

(21) Application number : **92305797.0**

(22) Date of filing : **24.06.92**

(51) Int. Cl.⁵ : **B32B 27/18, B65D 65/40**

(30) Priority : **03.07.91 US 724421**

(43) Date of publication of application :
**10.02.93 Bulletin 93/06**

(84) Designated Contracting States :
**DE ES FR GB GR IT PT SE**

(71) Applicant : **E.I. DU PONT DE NEMOURS AND
COMPANY
1007 Market Street
Wilmington Delaware 19898 (US)**

(71) Applicant : **FRITO-LAY, INC.
7701 Legacy Drive
Plano Texas 75024-4099 (US)**

(72) Inventor : **Brodie, III, Vincent
3312 Rockfield Drive South Wilmington
Delaware 198107 (US)**
Inventor : **Elder, Vincent Allen
2903 Panorama Drive, Carrollton
Texas 75007 (US)**
Inventor : **Parsons, Mary
3906 Amy Road, Garland
Texas 75043 (US)**
Inventor : **Specht, James David
4208 Buckthorn Street, Flower Mound
Texas 75028 (US)**

(74) Representative : **Pendlebury, Anthony et al
PAGE, WHITE & FARRER 54 Doughty Street
London WC1N 2LS (GB)**

(54) **Novel packaging compositions that extend shelf life of oil-containing foods.**

(57)   A novel method and packaging material is disclosed which is useful in extending the shelf life of oil-containing foods by absorbing undesirable aldehydes that are produced during oil degradation.

# FIG. 1

EP 0 526 977 A2

Field of the Invention

The present invention relates to materials and to a method useful for packaging oil-containing food products, especially packaged foods whose shelf life is limited due to oil degradation.

Background of the Invention

Oil-containing foods that are packaged and stored at ambient conditions are subject to limited shelf lives as the oil therein degrades due to oxidative reactions. The shelf life of a packaged product refers to that period of time wherein the qualities of the product are not discernibly different from freshly-made product. Over time, moisture changes and oil degradation will adversely affect the aroma, texture and taste of the packaged food. Such concerns have been addressed in the past by packaging oil-containing foods in moisture and oxygen barrier films, opaque films that reduce light-struck reactions, and by flushing the package with an inert gas such as nitrogen. These measures are successful to some degree in extending the shelf life of oil-containing packaged foods. However, each of the prior art approaches to extending shelf life is limited in that they only address ways to reduce the oxidative degradation of oil, they do not give consideration to the build up of oxidative by-products within the package. Inevitably some degradation will occur and the measures taken to prevent oxidation, such as barrier films, then act to entrap the undesirable by-products, such as aldehydes which impart off-flavors associated with rancidity, and which contribute to staling of the food product.

What remains lacking in the field of packaging for oil-containing foods is a packaging method and material that copes with the by-products formed from oil degradation.

It is one object of the present invention to provide a method for packaging oil-containing food products that are stored under ambient conditions in such a way that oil degradation by-products build-up within the package is significantly reduced.

It is another object of the present invention to provide materials capable of reacting with and immobilizing oil degradation by-products.

It is yet another object of the present invention to provide a packaging structure that significantly reduces the build-up of oil degradation by-products within the package.

These and other objects of the present invention, together with advantages over known practices, will become apparent from the specification which follows and are accomplished by the invention as hereinafter described and claimed.

SUMMARY OF THE INVENTION

The present invention relates to a method of extending the shelf life of an oil-containing food that is disposed in a sealed package, which method includes packaging the oil-containing food within a packaging material that contains an effective amount of an aldehyde-absorbing composition that is accessible to aldehydes produced as by-products from oil degradation within the sealed package. The invention also relates to a package for extending the shelf life of an oil-containing food, which package is sealed and contains therein an effective amount of an aldehyde-absorbing material. In a preferred embodiment the package is constructed from a packaging material that contains an effective amount of an aldehyde-absorbing composition therein. The packaging material may be a flexible polymer laminate that also includes moisture and oxygen barriers. The packaging material may be further characterized by having a layer which separates the aldehyde-absorbing composition from the food, but which permits aldehyde migration across the separating layer.

In accordance with the subject invention, a composition capable of reacting with oil degradation by-products such as by absorbing, catalyzing and the like in a manner which renders the by-products immobile, hereinafter referred to as absorbing; is incorporated into an oil-containing food package in such a way that the oil degradation by-products are exposed to the absorbing composition. Oil degradation by-products are predominately aldehydes. One aldehyde, hexanal, is a relative indicator of the oil-containing food product's acceptability, as hexanal is a by-product of linoleic acid oxidation. As the product ages, the amount of hexanal developed in a sealed package containing the product will increase.

As used herein, reference to the oil-containing food product will be with respect to fried potato chips, which have oil contents of about thirty percent by weight, although it is understood that any oil-containing food product that is stored for any time under ambient conditions will likewise benefit from the invention. Other oil-containing food products contemplated as beneficiaries of the subject teaching include other low moisture salty snack foods such as corn chips, tortilla chips, puff extruded corn-based snacks; pretzels, popcorn, bakery items such as cookies, muffins and cakes; nuts; crackers; oil-based seasoned products; fat-containing confectioneries; dairy products and cooking oil.

Any composition capable of absorbing an effective amount of aldehydes, as defined hereafter, and suitable for use in direct or indirect contact with food may be used in accordance with the present teaching to extend shelf life. Preferably, the aldehyde absorbing composition is capable of being incorporated into a packaging material. A further optional property in selecting the aldehyde-absorbing composition is the composition's selective preference for aldehyde absorption. Other organic compounds exist within the sealed package that impart aromas and flavors associated with the food product that enhance the organoleptic properties of the food. The pyrazines are examples of such organic compounds. Aldehyde-absorbing compositions that also scalp significant amounts of desirable organic compounds may function to extend shelf life, but also produce a bland, flavorless food product. Thus, the selection of the aldehyde-absorbing composition should also give consideration to the composition's preference for absorbing aldehydes.

Compositions known to absorb significant amounts of aldehydes may be selected from compounds having available primary and/or secondary amine groups and strong inorganic bases. Preferably the aldehyde-absorbing compositions are selected from the group consisting of polymers with a high content of primary amines and strong inorganic bases. Most preferably the aldehyde-absorbing compositions are selected from the group consisting of polyethylenimine, polymers containing ethylene diamine, diisopropanolamine, sodium hydroxide, and calcium hydroxide.

The composition may be directly exposed to the food product within the package or may have indirect contact with the food, separated by a functional barrier that prevents direct contact between the aldehyde-absorbing composition and the food product but across which aldehydes can migrate to contact the aldehyde-absorbing composition. As such, the aldehyde-absorbing composition may be disposed as the inner layer of a laminated packaging material for direct contact with the food product and the generated aldehyde by-products. The aldehyde-absorbing composition may also be disposed as a discrete layer or thin film within a laminated packaging material for indirect contact with the food product. Such embodiments will function in accordance with this disclosure if the generated aldehydes can migrate across any intervening layers to contact the aldehyde-absorbing composition.

In yet another embodiment, the aldehyde-absorbing composition may be disposed within a sealed package as a separate package insert, such as, by way of examples, disposed on or within a coupon or information booklet, an overwrapped coupon or booklet, a capsule or packet. The consideration for use, availability to contact and absorb aldehydes produced by oil degradation, remains the same as when the aldehyde-absorbing composition is incorporated into the packaging material.

An effective amount of the aldehyde-absorbing composition must be used. By effective amount, is meant that the aldehyde-absorbing composition is available to absorb aldehydes produced by oil degradation at such a rate and in such amounts that the hexanal level within the sealed package does not exceed that level indicative of staling during the intended shelf life of the food product. The effective amount will be dependent on the reactivity of the selected aldehyde-absorbing composition, the degradation properties of the oil used in the food product and the migration rate of the aldehydes to the aldehyde-absorbing composition including across any intervening materials that may be present.

A preferred aldehyde-absorbing composition for use in accordance with the present invention is polyethylenimine. Polyethylenimine contains primary and secondary amine groups that are highly reactive with aldehydes such as pentanal, hexanal and heptanal, but significantly less so with other organic compounds such as 2-methylbutanal, toluene, methylpyrazine and 4-heptanone. Polyethylenimine may be used in indirect contact with foods and is stable when disposed within a packaging material. Polyethylenimine is known as a primer for laminated film structures that can be used as packaging materials. In United States Patent No. 4,439,493 to Hein, et al., polyethylenimine is disclosed as a primer for a multi-layer oriented heat sealable film structure. This reference is representative of the use of polyethylenimine in prior art packaging material. Polyethylenimine as disclosed in this reference is disposed within a packaging structure in such a manner that any aldehydes existing within a sealed package made from the packaging material are effectively blocked by intervening polymeric layers from reaching the aldehyde-absorbing polyethylenimine. Further, the amount of polyethylenimine that is taught for use as a primer is from about 1.6 to about 8.1 micrograms/$cm^2$ (0.01 to 0.05 lbs/3000 $ft^2$). Greater amounts of polyethylenimine primer are taught to not enhance the material's functions as a primer and to possibly contribute to lamination problems. However, such amounts are not sufficient to absorb aldehydes produced by oil degradation at such a rate as to prevent build-up of hexanal within the sealed package.

Additional advantages of the invention will be discussed in conjunction with the below drawings and examples.

DETAILED DESCRIPTION OF THE DRAWINGS

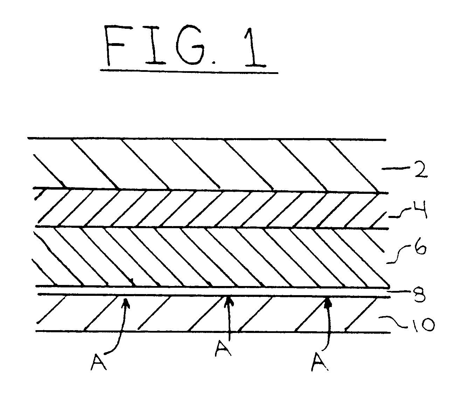

Figure 1 depicts a packaging film structure made in accordance with the invention. The packaging film depicted represents a conventional structure except that an aldehyde-absorbing material is contained therein, in such an amount and positioned in such a manner, that it is effective in removing aldehyde by-products formed from oil degradation in food that is packaged with this film.

The structure comprises an outer layer 2 of 0.019 mm (.00075 in) thick biaxially oriented polypropylene which imparts strength and moisture barrier properties to the structure. A second layer 4 of low density polyethylene, about 1.14 gms per 1000 $cm^2$ (seven pounds per ream), is disposed as an adhesive between the outer layer 2 and an inner layer 6 of 0.012 mm (.00048 in) thick metallized polyester. The polyester layer 6 provides a base for metalizing the film structure. The metalized polyester layer provides a high barrier to oxygen and moisture migration. Contiguous to the metallized polyester layer 6 is a thin film 8 of an aldehyde-absorbing composition, such as polyethylenimine. An effective amount of polyethylenimine has been found, in this structure, to be from about 16 to 64 micrograms/$cm^2$ (0.10-0.40 lbs/3000 $ft^2$) and preferably from about 16 to 33 micrograms/$cm^2$ (0.10 - 0.20 lbs/3000 $ft^2$). Overlaying the polyethylenimine layer 8 is a sealant material 10, such as Surlyn 1652SR available from I.E. DuPont DeNemours and Company, Wilmington, Delaware. The sealant layer provides adhesion when the packaging material is formed into a bag. Aldehydes, such as pentanal, hexanal and heptanal, identified by the letters A in the Figure, will be produced within a sealed package of oil-containing food, such as potato chips. The aldehydes are capable of passing across the sealant layer 10, as indicated by the arrows in the Figure. When the aldehyde contacts an active primary or secondary amine on the aldehyde-absorbing composition thin film 8, it is immobilized and does not contribute to shortening the packaged product shelf life nor does it accumulate in the sealed package to create an unpleasant aroma or contribute to off-flavor when the package is opened.

Further aspects of a packaging film structure as shown in Figure 1 accompanies the below Examples.

EXAMPLES

Example 1.

This Example demonstrates the ability of certain compositions to absorb aldehydes, especially hexanal. Compositions that absorb hexanal will remove the by-products of oil-degradation from a sealed package having an oil-containing food product therein.

In this Example, a standard solution is prepared of 0.5 micrograms of hexanal per microliter of methanol. The compositions to be tested for aldehyde absorption may be provided as a thin film within a 6.45 $cm^2$ (1 $in^2$) sample of packaging film disposed in a vial, may be provided as an evaporative coating in the test vial or may be disposed in the test vial in solid form. To make the evaporative coating compositions that are soluble in methanol are dissolved therein at about 0.1 gram of the composition to be screened per 10 ml. of methanol. This solution is placed in a vial and the methanol is evaporated with compressed nitrogen, leaving the composition disposed on the sidewalls of the vial. If the composition is not soluble in methanol, then about 10 mg. of the composition are directly disposed into the vial.

Once the composition is disposed within the test vial, a measured amount of the standard hexanal-in-methanol solution is placed in the vial and the vial is sealed. The sealed vial is heated at about 80°C for about one hour. Hexanal in the vial is then measured by static headspace-gas chromatography. The difference between the initial hexanal level and the level measured after one hour at 80°C is used to calculate the percent absorbed by the aldehyde-absorbing composition.

Table 1 below lists hexanal absorption results for a variety of materials tested in the above-described manner.

## TABLE 1
## HEXANAL ABSORPTION OF VARIOUS COMPOUNDS

| COMPOSITION | PERCENT HEXANAL ABSORBED |
|---|---|
| **Effective (>80% absorbed)** | |
| Aliphatic Amines | |
| Diisopropanolamine | 99 |
| Polyethylenimine | 99 |
| Tetraethylenepentamine | 100 |
| Triethylene tetramine hydrate | 100 |
| Diethylene triamine | 99 |
| Ethylene diamine | 99 |
| Diethanolamine | 97 |
| isopropanolamine | 97 |
| Hexylamine | 81 |
| 2-Amino-2-methyl-1-propanol | 87 |
| Aromatic Amines | |
| p-Anisidine (para-methoxyaniline) | 98 |
| N-isopropyl-N'phenyl-p-phenylenediamine | 93 |
| N-(1,3-dimethylbutyl)-N'phenyl-p-phenylenediamine | 98 |
| N, N'bis ([1,4-dimethylpentyl]-p-phenylenediamine) | 97 |
| Inorganic Bases | |
| Calcium oxide | 99 |
| Sodium hydroxide | 97 |
| Calcium hydroxide | 100 |
| **Ineffective (<80% absorbed)** | |
| Amides | |
| Polyamide resin (CAS No. 68410231) | 11 |
| Melamine | 20 |
| Urea | 5 |
| Inorganics | |
| Ammonium sulfate | 8 |
| Ammonium acetate | 23 |
| Sodium carbonate | 5 |
| Miscellaneous | |
| Diphenylamine | 36 |
| N, N'diethyl-ethylenediamine | 56 |
| Triisopropanolamine | 21 |
| Triethanolamine | 0 |

As can be seen from Table 1, compositions that contain primary and secondary amines absorb hexanal, but absorption by tertiary amines and amides is signifcantly reduced. Two oligomers of ethylenediamine, tetraethylene pentamine and triethylene tetramine hydrate, absorbed all of the available hexanal. Strong basic compositions, such as calcium hydroxide and sodium hydroxide absorbed essentially all of the available hexanal.

Compounds which absorbed more than 80% of the hexanal in this test are considered to be in conformance with the present invention and are capable of being used as aldehyde-absorbing compositions in food packaging. Other considerations in selecting an aldehyde-absorbing composition for food packaging will include the composition's volatility and migration characteristics as well as its preference for absorbing aldehydes over other organic compounds. Other additives may be used to increase effectiveness of an aldehyde-absorbing composition.

Example 2

The same test procedure described in Example 1 above was used to test the absorption of other organic compounds by aldehyde-absorbing compositions. In these tests the standard hexanal-in-methanol solution used in Example 1 was replaced with solutions of 2-methylbutanal-, heptanal-, pentanal-, toluene-, methylpyrazine- or 4-heptanone-in-methanol to determine the absorption of these compounds by the aldehyde-absorbing compositions. The results of these tests are displayed in Table 2 below:

TABLE 2
PERCENT ABSORPTION AFTER ONE HOUR, 80°C

| COMPOUND ABSORBED | ABSORBING COMPOUND | | |
|---|---|---|---|
| | POLYETHYLEN-IMINE (0.5 mg.) | DIISOPROPANOL-AMINE (0.1 mg.) | CALCIUM HYDROXIDE (20 mg.) |
| 2-Methylbutanal | - | 93 | 97 |
| Pentanal | - | 98 | 99 |
| Hexanal | 99 | 99 | 85 |
| Heptanal | 100 | 100 | 94 |
| Toluene | 0 | 13 | 10 |
| Methylpyrazine | 0 | 21 | 10 |
| 4-Heptanone | 1 | 25 | 46 |

The selective absorption of these compositions can be seen from the above Table 2. Such aldehyde compositions are especially suitable for use in conjunction with food products that also release other organic compounds which contribute to the preferred aroma and taste of the food. The above compositions will preferentially absorb the undesirable aldehydes produced by oil degradation, (2-methylbutanal, pentanal, hexanal and heptanal) while not significantly reducing the amount of desirable compounds present in the sealed package (toluene, methylpyrazine and 4-heptanone).

Example 3.

This Example demonstrates the reduction of hexanal in potato chips through the use of aldehyde-absorbing compositions. A test was designed wherein two vials, each containing two grams of potato chips, were disposed in a glass jar along with a third vial containing the test composition. The test compositions are described in Table 3A below. The glass jar was sealed and placed in an oven at 40°C for about three days. The jar was then removed from the oven and allowed to cool. The jar was then opened and the vials containing the potato chips were removed. The hexanal level of the potato chips was measured by static-headspace gas chromatography. The results of these tests are shown below in Table 3. The data are expressed as a percent of Control Test No. 1, wherein there was nothing in the third vial during the heating period. The lower percentage represents more effective aldehyde absorption as more hexanal was removed from the potato chips. As a benchmark, the control potato chips were measured to have about 2.78 ppm hexanal after heating for three days at 40°C. In this Example, polyethylenimine, diisopropanolamine and calcium hydroxide were tested as the aldehyde-absorbing composition.

6

## TABLE 3A
### TEST COMPOSITIONS

| TEST NO. | ALDEHYDE-ABSORBING  COMPOSITION |
| --- | --- |
| 1. | Control; Empty Vial. |
| 2. | Control; 103.2 cm$^2$ (16 in$^2$) of packaging material as shown in Figure 1 except that no aldehyde-absorbing thin film was present. |

## TABLE 3A (continued)
### TEST COMPOSITIONS

| TEST NO. | ALDEHYDE-ABSORBING COMPOSITION |
| --- | --- |
| 3. | 103.2 cm$^2$ (16 in$^2$) of packaging material as shown in Figure 1 with an aldehyde-absorbing thin film of polyethylenimine present at a concentration of about 16 micrograms/cm$^2$ (0.1 lb/3000 ft$^2$). |
| 4. | 103.2 cm$^2$ (16 in$^2$) of packaging material as shown in Figure 1 minus the aldehyde-absorbing thin film layer but having about 0.5 mg. of polyethylenimine disposed over about a 9 cm$^2$ area on the outer side of the sealant layer, so that the polyethylenimine was not separated from aldehydes produced within the potato chips by any packaging layer. |
| 5. | 1 mg. powdered calcium hydroxide. |
| 6. | 50 mg. powdered calcium hydroxide. |
| 7. | 3 mg. solid diisopropanolamine. |
| 8. | 70 mg. soiid diisopropanolamine. |

7

## TABLE 3B
## PERCENT HEXANAL REMAINING IN POTATO CHIPS
## AFTER THREE DAYS AT 40°C

| TEST RUN | ALDEHYDE-ABSORBING COMPOSITION | PERCENT HEXANAL REMAINING |
|---|---|---|
| 1 | Control | 100 |
| 2 | Control | 107 |
| 3 | Polyethylenimine | 54 |
| 4 | Polyethylenimine | 38 |
| 5 | Calcium hydroxide | 105 |
| 6 | Calcium hydroxide | 39 |
| 7 | Diisopropanolamine | 48 |
| 8 | Diisopropanolamine | 42 |

As can be seen from these tests, polyethylenimine was more effective when no intervening material separated it from the interior atmosphere of the jar (Test No. 4), as compared to when it was covered by a layer of Surlyn® brand sealant (Test No. 3), however, each test demonstrated significant hexanal reductions, 62% and 46% respectively. The effectiveness of calcium hydroxide was influenced by the amount of calcium hydroxide present. One milligram of calcium hydroxide was not effective in reducing hexanal, (Test No. 5), yet 50 mgs. removed about 61 % of the hexanal from the potato chips (Test No. 6). Diisopropanolamine was about equally effective in reducing hexanal, whether present at 3 mg or 70 mg. Diisopropanolamine absorbed about 52 percent and 58 percent of hexanal generated at the elevated temperature used in this test. Thus, each of these three compositions was shown to be an aldehyde-absorbing composition when present in an effective amount.

Example 4.

The packaging films utilized in Test Nos. 2 and 3 in Example 3 were also used as standard packaging material for potato chips. About 184 gms. (6.5 oz.) of potato chips were packaged using the films under standard packaging conditions common to the business and with air interpacked with the potato chips. The interior surface area of the packages was about 1450 cm$^2$ (225 in$^2$).

The sealed packages were then placed in a shelf life test, that is, stored at about 23 °C (73 °F), and sampled over a period of time to measure the buildup of hexanal within the packages. Hexanal accumulated in the control package at a steadily increasing rate. A projected shelf life of 49 days corresponded to a hexanal level within the bag of about .4 ppm. At the same time, 49 days, the hexanal level in the package incorporating an aldehyde-absorbing composition in the packaging material was only 0.16 ppm. The hexanal level in this package remained consistently low, measuring <.19 ppm at 80 days, 0.21 at 100 days and .22 ppm at 120 days. Thus, the present invention was useful in extending the shelf life of potato chips by more than 100 percent.

It is recognized that the shelf life of an oil-containing food product can be extended by packaging the food in an essentially oxygen-free package. To determine the benefit of the subject invention when oxygen is not present, potato chips were packaged as above-described but instead of packaging them in air, the packages were flushed with nitrogen to remove oxygen prior to sealing.

Even with state-of-the-art precautions to insure freshness, an opaque moisture and oxygen barrier film with nitrogen flushing, the hexanal level within the package exceeded 0.1 ppm after only 21 days and 0.15 ppm after 63 days. The hexanal level in the packages that contained the additional freshness protection of an aldehyde-absorbing composition had hexanal levels of .06 after 21 days and .06 ppm after 63 days and never exceeded 0.1 ppm after a test period of 120 days.

Based upon the foregoing results and the specification disclosed, it should be clear that the use of an effective amount of an aldehyde-absorbing composition when used in accordance with the present invention will provide extended shelf life to oil-containing packaged foods.

## Claims

1. A method of extending the shelf life of an oil-containing food disposed in a sealed package, which method comprises packaging the oil-containing food within a packaging material that incorporates an aldehyde-absorbing composition which is accessible to aldehydes produced as by-products from oil degradation within the sealed package.

2. A method according to claim 1, wherein the packaging material is flexible packaging film.

3. A method according to claim 1, wherein the packaging material is a rigid container.

4. A method according to claim 1, 2 or 3, wherein the packaging material includes a moisture barrier and an oxygen barrier.

5. A method according to any one of the preceding claims, wherein the aldehyde-absorbing material is selected from calcium hydroxide, diisopropanolamine, and polyethylenimine.

6. A method according to claim 5 wherein the aldehyde-absorbing material is polyethylenimine, and is present in an amount of from 16 to 64 micrograms/cm$^2$ (0.1 to 0.4 lbs/3000 ft$^2$).

7. A method according to claim 6, wherein the polyethylenimine is present in an amount of from 16 to 33 micrograms/cm$^2$ (0.1 to 0.2 lbs/3000 ft$^2$).

8. A method according to any one of the preceding claims, wherein the packaging material includes means for separating the aldehyde-absorbing material from the food, which means permits aldehyde migration from the food to the aldehyde-absorbing material.

9. A package for extending the shelf life of an oil-containing food comprising a sealed package having an aldehyde-absorbing material therein which material is accessible to aldehydes produced as by-products from oil degradation within the sealed package.

10. A package according to claim 9, wherein the aldehyde-absorbing material is disposed as a layer within the packaging material.

11. A package according to claim 10, wherein the packaging material further comprises barrier layers to moisture and oxygen migration between the interior of the sealed package and the exterior.

12. A package according to claim 10 or 11, wherein the packaging material includes means for separating the aldehyde-absorbing material layer from the food, which means permits aldehyde migration from the food to the aldehyde-absorbing material.

13. A package according to claim 9, wherein the aldehyde-absorbing material is disposed as an insert inside the sealed package.

14. A package according to claim 13, wherein the aldehyde-absorbing material is separated from the food by means which permit aldehyde migration from the food to the aldehyde-absorbing material.

15. A package according to any one of claims 9 to 14, wherein the package is a flexible film package.

16. A package according to any one of claims 9 to 14, wherein the package is a rigid package.

17. A package according to claim 15, wherein the flexible film comprises an oxygen barrier layer, a moisture barrier layer, a layer of an aldehyde-absorbing material and a sealant layer.

18. A package according to any one of claims 9 to 17, wherein the aldehyde-absorbing material is selected from calcium hydroxide, diisopropanolamine, and polyethylenimine.

19. A package according to claim 18, wherein the aldehyde-absorbing material is polyethylenimine and is present in an amount of from 16 to 64 micrograms/cm$^2$ (0.1 to 0.4 lbs/3000 ft$^2$).

20. A package according to claim 19, wherein the polyethylenimine is present in an amount of from 16 to 33 micrograms/cm$^2$ (0.1 to 0.2 lbs/3000 ft$^2$).

21. A packaging material which extends the shelf life of an oil-containing packaged food under ambient conditions by the selective absorption of aldehydes, which packaging material contains an effective amount of an aldehyde-absorbing material.

22. A packaging material according to claim 21, wherein the aldehyde-absorbing material is selected from calcium hydroxide, diisopropanolamine, and polyethylenimine.

23. A packaging material according to claim 22, wherein the aldehyde-absorbing material is polyethylenimine and is present in an amount of from 16 to 64 micrograms/cm$^2$ (0.1 to 0.4 lbs/3000 ft$^2$).

24. A packaging material according to claim 23, wherein the polyethylenimine is present in an amount of from 16 to 33 micrograms/cm$^2$ (0.1 to 0.2 lbs/3000 ft$^2$).

# FIG. 1